# EUROPEAN PATENT SPECIFICATION

(11) **EP 1 139 348 B1**
(45) Date of publication and mention of the grant of the patent: **23.01.2008**
(21) Application number: 00304058.1
(22) Date of filing: 15.05.2000
(51) Int. Cl.: G21C 3/322, G21C 3/352

(54) **Twisted deflector for enhancing coolant mixing in a nuclear fuel assembly**
Mischgitter mit gebogenen Mischflügeln für ein Kernbrennstabbündel
Grille de mélange comprenant des aillettes courbées pour un assemblage de combustible nucléaire

(30) Priority: 31.03.2000 KR 2000016768
(43) Date of publication of application: 04.10.2001
(73) Proprietor: Korea Atomic Energy Research Institute, Daejeon 305-353 (KR); Korea Electric Power Corporation, Seoul 135-791 (KR)
(72) Inventor: In, Wangkee, Yusong-Ku, 305-333, Taejon-Si (KR); Kang, Heungseok, 305-503, Taejon-Si (KR); Yoon, Kyungho, 305-503, Taejon-Si (KR); Jung, Younho, 305-333, Taejon-Si (KR); Kim, Hyungho, 305-503, Taejon-Si (KR); Oh, Dongseok, 305-390, Taejon-Si (KR); Chun, Taehyun, 305-503, Taejon-Si (KR); Song, Keenam, 305-333, Taejon-Si (KR)
(74) Representative: Ablett, Graham Keith

(56) References cited:
- EP-A- 0 304 724
- EP-A- 0 971 363
- DE-U- 9 302 759
- US-A- 4 827 063
- US-A- 5 440 599

## Description

### BACKGROUND OF THE INVENTION

### Field of the Invention

The present invention relates, in general, to nuclear reactor fuel spacer grids and, more particularly, to a twisted deflector for enhancing coolant mixing in a nuclear fuel assembly, which is capable of minimizing pressure loss and generating the rotational flow mixing and cross-flow coolant mixing at the same time, thereby improving heat transfer between coolant and fuel rods in a nuclear reactor.

### Description of the Prior Art

As well known to those skilled in the art, a nuclear fuel assembly comprises a plurality of fuel rods, a plurality of spacer grids, an upper end fitting and a lower end fitting. Subchannels are formed between the fuel rods and define the passages of the coolant, between the fuel rods. The spacer grid serves to maintain the fuel rods in place, and is formed by arranging a plurality of grid strips in the form of a grid. Each of the grid strips is provided with springs and arch-shaped dimples. In some cases, mixing devices are formed integrally with the spacer grid.

Heat generated in the fuel rods by means of nuclear fission is transferred to the coolant and used to produce steam that is necessary for the generation of electricity. Heat transfer between the surfaces of the fuel rods and the coolant is performed mainly by nucleate boiling. Nucleate boiling heat transfer refers to the transfer of heat to coolant that is generated while vapour bubbles generated on the surfaces of the fuel rods are moved to the center of the subchannel. As the heat fluxes of the fuel rods are increased, the generation of bubbles is increased, and so bubble layers are formed on the surfaces of the fuel rods. As a result, since the coolant is hindered from entering the heating surfaces of the fuel rods, the heat transfer is decreased when the heat flux is more than a certain critical value. Therefore, it is an important technical task to increase critical heat flux so as to maintain effective nucleate boiling.

The spacer grid increases the turbulent mixing of the coolant that flows between the fuel rods, and so serves to improve the heat transfer. Recently, the development of a spacer grid having mixing devices is in progress so as to increase the forcible mixing and turbulent mixing. The mixing devices operate to promote the rotational flow mixing in the subchannel or the cross-flow mixing and turbulent mixing between the subchannels, thereby equalizing the inner temperature distribution of a nuclear reactor and improving the heat transfer performance of the nuclear fuel assembly. However, such mixing devices are problematic in that they reduce the passage of the coolant and, consequently, increase the pressure drop of the nuclear reactor. Therefore, it is essential to develop a nuclear fuel spacer grid that is capable of minimizing the pressure drop of the reactor core while holding the fuel rods securely and increasing the critical heat flux.

A general technique of the forcible mixing of the coolant for improving the heat transfer of the nuclear fuel assembly is to generate rotational flows in the subchannels and cross-flows between adjacent subchannels. Each of the rotational flows in the subchannel eliminates an vapour bubble layer adjacent to the surface of the fuel rod in a boiling state, thus improving the critical heat flux. That is, the rotational flow generates a centrifugal force, thereby causing the relatively hot, light liquid near the surface of the fuel rod to be moved toward the center portion of the subchannel and the relatively cold, heavy liquid in the center of the subchannel toward the surface of the rod. Such a rotational flow eliminates a thermal boundary layer in the case where a rotational flow generating apparatus is not provided, and improves the heat transfer. On the other hand, the cross-flow between the subchannels equalizes the temperature distribution of the coolant in the nuclear reactor by means of the coolant mixing in adjacent channels, thereby suppressing the generation of the critical heat flux due to the partial temperature increase of the coolant, thereby increasing the heat transfer.

In the past, there were developed flow directional vanes that are capable of improving the heat transfer performance of the nuclear fuel assembly through the generation of the cross-flow between subchannels.

U.S. Pat. No. 4,692,302 discloses a spacer grid for a nuclear fuel assembly wherein multiple pairs of split vanes are respectively formed on the interlocked portions of the spacer grid and each pair of vanes are respectively bent in opposite directions. The invention of U.S. Pat. No. 4,692,302 is aimed of promoting a cross-flow coolant mixing. Additionally, the spacer grid of U.S. Pat. No. 4,692,302 is problematic in that the vanes may be easily broken during the assembly of the grid and pressure loss is increased due to the abrupt reduction of flow passages.

U.S. Pat. No. 5,440,599 discloses a spacer grid with side-supported flow directing vanes wherein multiple pairs of mixing vanes are respectively formed on the interlocked portions of the spacer grid and each pair of vanes are respectively bent at 90° toward subchannels. The invention of U.S. Pat. No. 5,440,599 has also a main object of promoting a cross-flow mixing of coolant-adjusting subchannels. Since each of the vanes has a broad width in its upper portion and a narrow width in its lower portion, they cannot generate a strong flow deflecting effect. Furthermore, the cross-flow mixing generated by the vanes occurs adjacent to the vanes, but is not spread downstream.

Recently, as disclosed in Korea Pat. 98-3133, the development of swirl vanes has been attempted so as to activate the rotational flow mixing of the coolant. In the swirl vanes, the sizes and tilt angles of the vanes are limited so as to prevent the vanes from coming into contact with fuel rods. Consequently, the generation of strong rotational flows becomes difficult and the generation of cross-flow mixing becomes decrease.

The conventional flow deflectors for a nuclear fuel assembly may be classified into flow deflectors for generating cross-flows between subchannels and flow deflectors for generating rotational flows. Therefore, such a conventional twisted deflector can generate only one of cross-flow and rotation flow and causes the effect of flow mixing to be diminished soon.

Alternative known deflector vane arrangements are disclosed in DE 93 02 759 U, US 4,827,063 and EP 0 971 363.

### SUMMARY OF THE INVENTION

Accordingly, keeping in mind the above problems occurring in the prior art, the present invention is made to provide a twisted deflector for enhancing coolant mixing in a nuclear fuel assembly, which is capable of generating the rotational flow mixing and cross-coolant mixing at the same time and enhancing the flow mixing effect of the coolant so as to spread the mixing effect far downstream.

Another object of the present invention is to provide a twisted deflector for enhancing coolant mixing in a nuclear fuel assembly, which is capable of minimizing pressure loss due to the variation of the size of flow passages.

In order to accomplish the above object, the present invention provides spacer grid for use in a nuclear fuel assembly, as specified in the claims.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is an elevational view showing a nuclear fuel assembly to which twisted deflectors of the present invention have been applied;
Fig. 2 is a perspective view showing a nuclear reactor spacer grid in accordance with a first embodiment of the present invention;
Fig. 3 is a plan view showing the spacer grid of the first embodiment;
Fig. 4 is a front view showing a grid strip of the spacer grid of the first embodiment;
Fig. 5 is a detailed view showing the twisted deflectors of the grid strip of the first embodiment;
Fig. 6 is a perspective view showing a nuclear reactor spacer grid in accordance with a second embodiment of the present invention;
Fig. 7 is a plan view showing the spacer grid of the second embodiment;
Fig. 8 is a front view showing a grid strip of the spacer grid of the second embodiment; and
Fig. 9 is a detailed view showing the twisted deflectors of the grid strip of the second embodiment.

### DESCRIPTION OF THE PREFERRED EMBODIMENTS

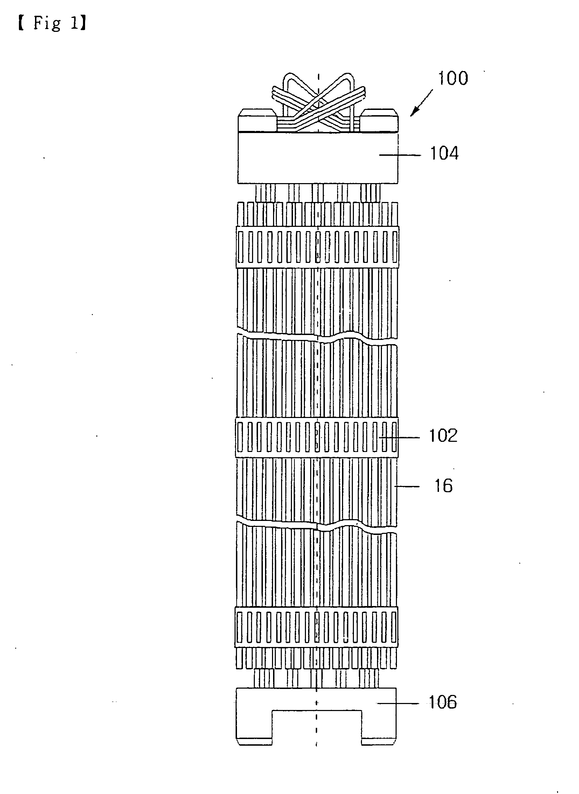

Fig. 1 is an elevational view a nuclear fuel assembly 100 to which twisted deflectors of the present invention have been applied. The nuclear fuel assembly 100 comprises a plurality of parallel arranged fuel rods 16, a plurality of spacer grids 102 for maintaining the fuel rods 16 in regularly spaced arrangement, and upper and lower end fittings 104 and 106 respectively positioned on the upper and lower ends of the fuel rods 16 for transferring and supporting an external load.

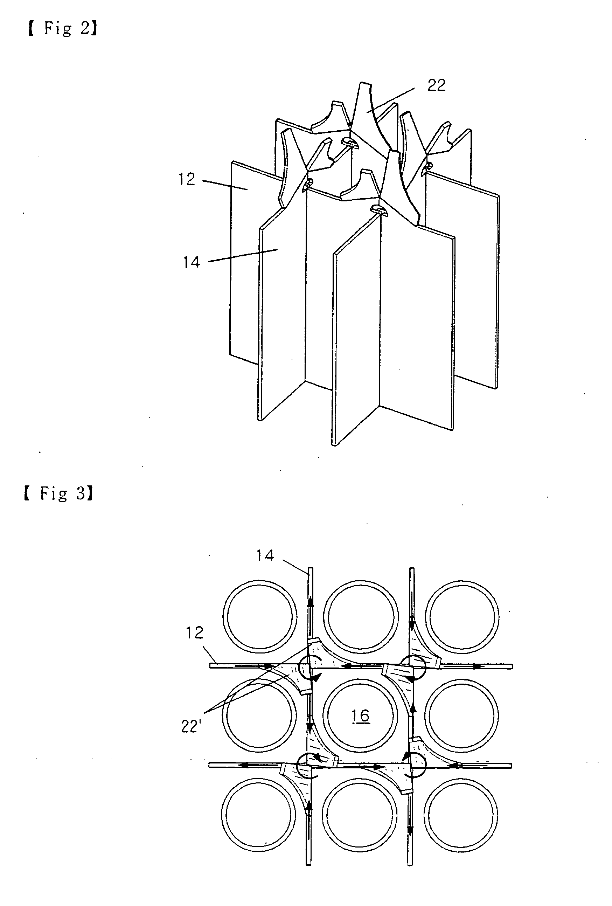

As illustrated in Fig. 2, each of the spacer grid 102 is formed by slottedly interlocking a first set of parallel grid strips 12 with a second set of parallel grid strips 14 at right angles and permanently fixing the second set of parallel strips 14 to the first set of parallel grid strips 12 by means of a welding process. A pair of flow deflecting vanes 22 are formed integrally along the top edge of one side of every strip, a position where two strips 12 and 14 are interlocked.

The twisted deflectors 22 of the present invention are tilted in opposite directions. In such a case, the upper edge of each vane 22 is not perpendicular to the center line of the subchannel but is inclined with respect to the center line, thereby allowing the coolant to be directed toward the interior of the subchannel and the adjacent subchannel. That is, a part of the coolant is directed toward the interior of the subchannel, while the remaining part of the coolant is directed toward its adjacent subchannel, thereby causing the rotational flow mixing and cross-flow mixing of the coolant to be generated at the same time.

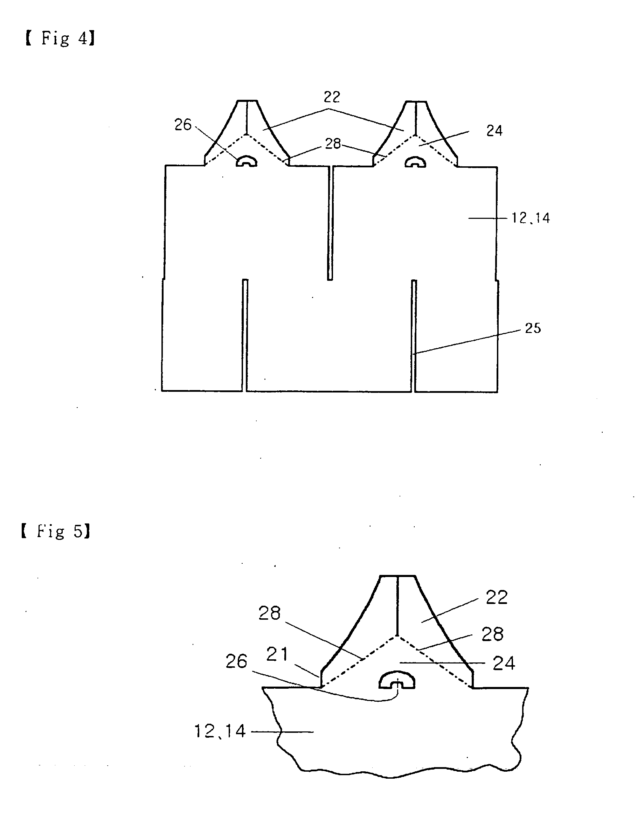

As illustrated in Fig. 4, each of the grid strips 12 and 14 includes the triangular vain support 24 and a pair of twisted deflectors 22. A welding window 26 for the welding of two adjacent grid strips and a slot 25 for the interlocking of the two adjacent grid strips are formed on each of the grid strips 12 and 14 at the center of the vain support 24. As known from Fig. 3, the outer edges of the vanes 22 are curved, and so the outer edges respectively and partially surround fuel rods 16 when the vanes 22 are tilted in opposite directions.

The twisted deflectors 22 generate three-dimensional rotational flows(swirl), so that the flow directing effect caused by the operation of the vanes 22 can persist far downstream, thereby improving the heat transfer of the nuclear fuel assembly.

Additionally, since each pair of twisted deflectors 22, which are formed on two adjacent inclined top edges 28 of the vane support 24, are tilted in opposite directions, the vanes 22 can generate the rotational flow and cross-flow of the coolant at the same time. Furthermore, the shapes of the vanes 22 that are respectively tilted from the central planes of subchannels (reference numerals not assigned to) allow the relatively cold coolant in the central portions of the subchannels to directly come into contact with the surfaces of the fuel rods 16, thus breaking vapour bubble layers generated on the surfaces of the fuel rods 16.

Furthermore, since the twisted deflectors 22 are respectively slanted, the reduction of the flow passages is minimized and the variation of the flow passages is slowly progressed, thereby preventing excessive pressure loss. In such a case, the inclination angles of the inclined top edges 28 of the vane support 24 and the tilt angles of the twisted vanes 22 may be varied in a variety of fashions. However, in accordance with the numerical computational fluid dynamics analysis, the inclination angles of the inclined top edges 28 of the vane support 24 respectively and preferably are between 20° and 40°, while the tilt angles of the twisted vanes 22 respectively and preferably are between 30° and 50° .

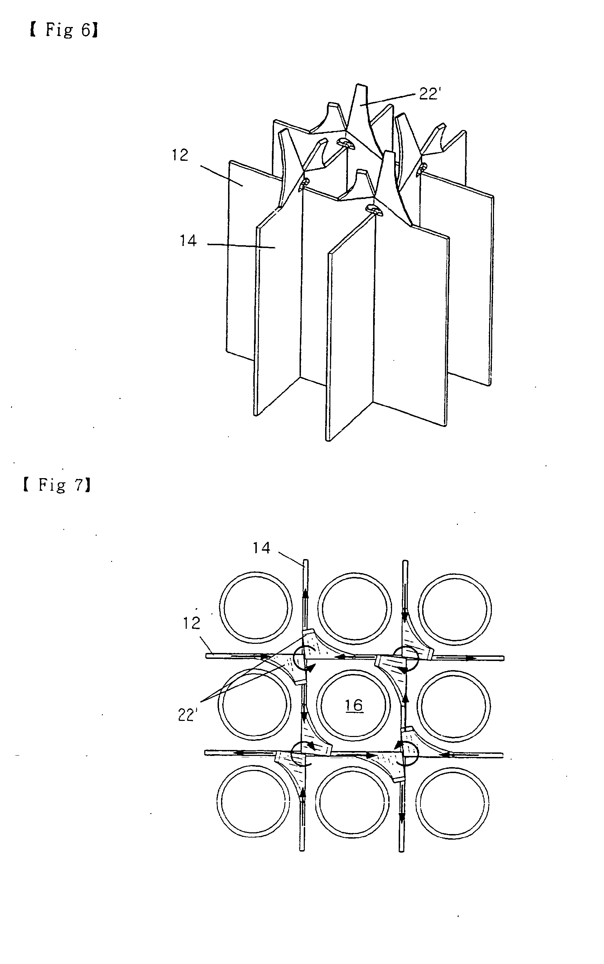

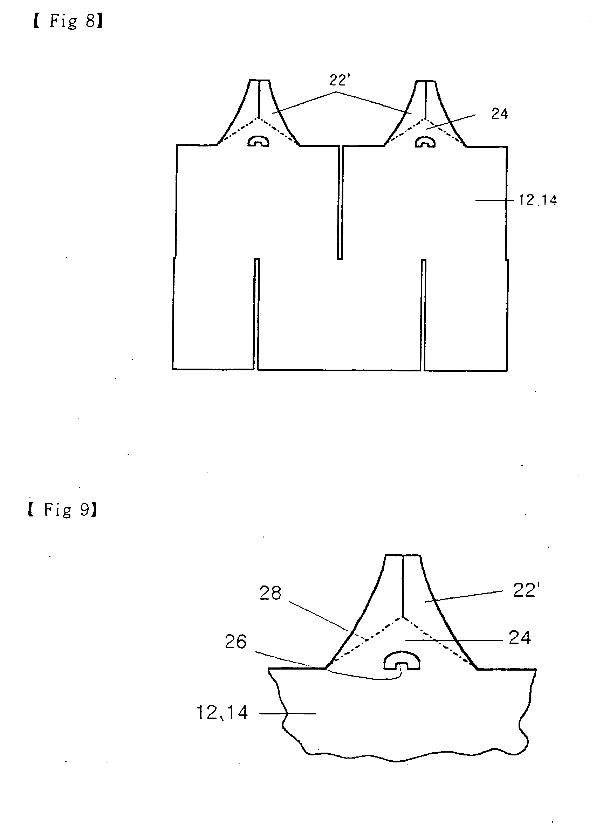

Figs. 6 to 9 illustrate another twisted deflector in accordance with a second embodiment of the present invention. In this vane structure, the linear portion 21 of the outside edge of each vane 22 is eliminated, thereby allowing the vane 22 to have a stable shape. That is, since the protrusions of the vanes 22 are eliminated, the vibration and deformation of the vanes 22 due to the coolant flow pressure is prevented and the negative vane effects, such as the generation of unstable flow and flow-induced vibration, due to the generation of vortex on the corner of the vane 22 are suppressed. Additionally, in this vane structure, since its contact area is reduced, its pressure drop can be decreased, but its flow deflecting effects are somewhat reduced in comparison with the vane structure of the first embodiment.

As described above, the present invention provides a twisted deflector, wherein each pair of polygonal vanes are respectively and integrally formed on two adjacent inclined top edges of each vane support and are respectively tilted in opposite directions, thereby directing the coolant toward the interior of the subchannel and its adjacent subchannel and, consequently, generating the rotational flow mixing and cross-flow mixing of the coolant at the same time.

Additionally, the present invention provides a twisted deflector, wherein the twisted deflectors are allowed to be tilted along the main flow direction of coolant, thereby allowing its flow directing effect to persist far downstream by generating swirls, preventing excessive pressure loss by minimizing the reduction of the flow passages, and generating a variety of flow mixing effects by varying the inclination angles of the inclined top edges of the vane supports and the tilt angles of the twisted vanes.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A spacer grid for use in a nuclear fuel assembly, the spacer grid being formed by a first set (12) of parallel grid strips and a second set (14) of parallel grid strips disposed orthogonally to the first set (12) to form a plurality of intersection positions at which strips of the two sets interlock, the strips defining a plurality of sub-channels for coolant flow, in which respective reactor rods are supportable with their axes substantially parallel to each other and to the sub-channels, the spacer grid having a plurality of twisted deflectors, each twisted deflector comprising a triangular vane support (24) carrying a pair of twisted flow deflecting vanes (22); the twisted vanes of each pair being tilted in opposite directions relative to the strip which carries them, said twist and tilt of each vane defining a flow path for said coolant to enter a respective sub-channel and an adjacent sub-channel thereby allowing simultaneous rotational and cross-flow mixing of the coolant, **characterised in that** a triangular vane support (24) is provided at each of said intersection positions; the vane supports provided at alternate said intersection positions being formed integrally with edges of grid strips of said first set; and the vane supports provided at the remainder of said intersection positions being formed integrally with edges of grid strips of said second set; the first and second sets of strips being adapted and arranged such that a different triangular vane support is provided at each intersection position; each pair of twisted flow deflecting vanes being joined together on one vane support at the said intersecting positions.

2. A spacer grid as claimed in claim 1 in which the outside edges of the flow deflecting vanes (22) are curved, so as to partially surround respective fuel rods (16).

3. A spacer grid as claimed in claim 1 or claim 2 in which the triangular portion (24) of the vane support is bounded by two inclined top edges (28) on which the two flow deflecting vanes are formed, the inclined edges each having an inclination angle between 20 and 40 degrees.

4. A spacer grid as claimed in any preceding claim in which flow deflecting vanes have tilt angles of between 30 and 50 degrees.

5. A spacer grid as claimed in any one of claims 2 to 4 in which the outside edge of each flow deflecting vane has no linear portion (21).

## Patentansprüche

1. Abstandsgitter zum Einsatz in einem Kembrennstabbündel, wobei das Abstandsgitter von einem ersten Satz (12) von parallelen Gitterstreifen und einem zweiten Satz (14) von parallelen Gitterstreifen gebildet wird, welche orthogonal zu dem ersten Satz (12) angeordnet sind, um eine Mehrzahl von Schnittstellen zu bilden, an denen die Streifen der beiden Sätze ineinander greifen, wobei die Streifen eine Mehrzahl von Unterkanälen für den Kühlmittelstrom bilden, in denen zugeordnete Reaktorstäbe derart gelagert sind, dass ihre Achsen im wesentlichen parallel zueinander und zu den Unterkanälen sind, wobei das Abstandsgitter eine Mehrzahl von gewundenen Ablenkeinrichtungen hat, jede gewundene Ablenkeinrichtung einen dreieckförmigen Flügelträger (24) aufweist, welcher ein Paar von gewundenen Strömungsablenkflügel (22) trägt, die gewundenen Flügel jedes Paars in Gegenrichtung relativ zu dem Steifen geneigt sind, der diese trägt, die Verwindung und die Neigung jedes Flügels einen Strömungsweg für das Kühlmittel bilden, um in einem zugeordneten Unterkanal und einen angrenzenden Unterkanal einzutreten, wodurch ein gleichzeitiges Rotations- und Querstromvernischen des Kühlmittels ermöglicht wird, **dadurch gekennzeichnet, dass** ein dreieckförmiger Flügelträger (24) an jeder der Schnittstellen vorgesehen ist, die Flügelträger an abwechselnden Schnittstellen integral mit den Rändern der Gitterstreifen des ersten Satzes ausgebildet sind und die Flügelträger an den restlichen Schnittstellen integral mit den Rändern der Gitterstreifen des zweiten Satzes ausgebildet sind, wobei die ersten und die zweiten Sätze von Streifen derart beschaffen und ausgelegt sind, dass ein unterschiedlicher dreieckförmiger Flügelträger an jeder Schnittstelle vorgesehen ist, und dass jedes Paar von gewundenen Strömurgsablenkflügeln miteinander an einem Flügelträger an den Schnittstellen verbunden ist.

2. Abstandsgitter nach Anspruch 1, bei dem die Außenränder der Strömungsablenkflügel (22) gekrümmt ausgebildet sind, so dass sie teilweise die zugeordneten Brennstäbe (16) umgeben.

3. Abstandsgitter nach Anspruch 1 oder Anspruch 2, bei dem der dreleckförmige Abschnitt (24) des Flügelträgers durch zwei geneigte, obere Kanten (28) begrenzt wird, an denen die beiden Strömungsablenkflügel ausgebildet sind, und bei dem die geneigten Kanten jeweils einen Neigungswinkel zwischen 20° und 40° haben.

4. Abstandsgitter nach einem der vorangehenden Ansprüche, bei dem die Strömungsablenkflügel Neigungswinkel zwischen 30° und 50° haben.

5. Abstandsgitter nach einem der Ansprüche 2 bis 4, bei dem der Außenseitenrand jedes Strömungsablenkflügels einen nicht linearen Abschnitt (21) hat.

## Revendications

1. - Grille d'espacement destinée à être utilisée dans un assemblage de combustible nucléaire, la grille d'espacement étant formée par un premier ensemble (12) de bandes de grille parallèles et un second ensemble (14) de bandes de grilles parallèles disposées perpendiculairement au premier ensemble (12) afin de former une pluralité de positions d'intersection auxquelles des bandes des deux ensembles se verrouillent mutuellement, les bandes définissant une pluralité de sous-canaux pour un écoulement d'agent réfrigérant, des barres de réacteur respectives étant aptes à être supportées avec leurs axes sensiblement parallèles les uns aux autres et aux sous-canaux, la grille d'espacement ayant une pluralité de déflecteurs tordus, chaque déflecteur tordu comprenant un support d'ailette triangulaire (24) portant une paire d'ailettes de déviation d'écoulement tordues (22) ; les ailettes tordues de chaque paire étant inclinées dans des directions opposées par rapport à la bande qui les porte, lesdites distorsion et inclinaison de chaque ailette définissant un chemin d'écoulement pour que ledit agent réfrigérant entre dans un sous-canal respectif et un sous-canal adjacent, permettant ainsi un mélange en rotation et à courant transversal simultané de l'agent réfrigérant, **caractérisée par le fait qu'**un support d'ailette triangulaire (24) est disposé à chacune desdites positions d'intersecion ; les supports d'ailette disposés auxdites positions d'intersection de façon alternée étant formés d'un seul tenant avec des bords de bandes de grille du premier ensemble ; et les supports d'ailette disposés aux positions d'intersection restantes desdites positions d'intersection étant formés d'un seul tenant avec des bords de bandes de grille dudit second ensemble ; les premier et second ensembles de bandes étant adaptés et agencés de telle sorte qu'un support d'ailette triangulaire différent est disposé à chaque position d'intersection ; chaque paire d'ailettes de déviation d'écoulement tordues étant réunie sur un support d'ailette auxdites positions d'intersection.

2. - Grille d'espacement selon la revendication 1, dans laquelle les bords externes des ailettes de déviation d'écoulement (22) sont incurvés, de façon à entourer partiellement des barres de combustible respectives (16).

3. - Grille d'espacement selon l'une des revendications 1 ou 2, dans laquelle la partie triangulaire (24) du support d'ailette est limitée par deux bords supérieurs inclinés (28) sur lesquels les deux ailettes de déviation d'écoulement sont formées, les bords inclinés ayant chacun un angle d'inclinaison entre 20 et 40 degrés.

4. - Grille d'espacement selon l'une quelconque des revendications précédentes, dans laquelle des ailettes de déviation d'écoulement ont des angles d'inclinaison d'entre 30 et 50 degrés.

5. - Grille d'espacement selon l'une quelconque des revendications 2 à 4, dans laquelle le bord externe de chaque ailette de déviation d'écoulement n'a pas de partie linéaire (21).
